# EUROPEAN PATENT SPECIFICATION

(11) **EP 4 116 149 B1**
(45) Date of publication and mention of the grant of the patent: **11.11.2026**
(21) Application number: 21183970.9
(22) Date of filing: 06.07.2021
(51) Int. Cl.: B60R 9/055, E05F 1/10, E05F 3/14, E05F 5/02, E05C 17/32

(54) **TILTING MECHANISM**
KIPPMECHANISMUS
MÉCANISME D'INCLINAISON

(43) Date of publication of application: 11.01.2023
(73) Proprietor: Thule Sweden AB, 335 04 Hillerstorp (SE)
(72) Inventor: NILVIUS, Anders, 33135 Värnamo (SE); LUND, Lucas, 562 30 Norrahammar (SE)
(74) Representative: Wallentin, Lars

(56) References cited:
- EP-A1- 2 251 514
- EP-A1- 3 269 601
- WO-A1-2017/221716
- DE-A1- 102006 042 081
- DE-U1- 20 104 100
- DE-U1- 29 907 931
- GB-A- 527 160
- JP-A- 2020 183 669
- KR-B1- 101 771 155
- US-A- 4 872 239
- US-A1- 2011 057 008
- US-A1- 2014 223 692

## Description

### TECHNICAL FIELD

The present disclosure relates to a cargo box with a tilting mechanism.

### BACKGROUND

Conventional load carriers sometimes comprise tilting mechanisms which allow moving the movable portion thereof with respect to a stationary portion. For example cargo boxes are known which comprise an openable and closable lid which is pivotably movable with respect to the base portion. Exemplary load carriers of that kind are disclosed in EP3269601A1 and DE102006042081A1. Furthermore, load carriers mountable to the rear of a vehicle are known in which a platform for supporting goods to be transported may be tilted for allowing access to a trunk of a vehicle. Movement of the above-described movable portions is primarily effected by a force applied by a user and may be assisted by specific force application configurations. However, known systems are configured such that the movable portion is set into vibration when it reaches an extended position which may lead to damages.

### SUMMARY

Therefore, there exists a desire for an improved load carrier with a tilting mechanism addressing the above-mentioned drawback. In particular, there is a desire to improve the movement of the movable portion such that a vibration of the movable portion at the extended position is at least reduced or even fully prevented.

In view of the above, it is the object of the invention to provide an improved cargo box.

The object is solved by a cargo box according to claim 1. Advantageous further formations are subject of the dependent claims.

Disclosed is a load carrier in form of a cargo box, comprising a tilting mechanism. The tilting mechanism is configured to assist a tilting movement of a movable portion of the load carrier at least into a non-use position of the movable portion. The non-use position of the movable portion may be a position in which the load carrier is normally not usable.

The movable portion may be a lid for covering the base portion of a load carrier.

The tilting mechanism comprises a first coupling portion which is coupled to the movable portion of the load carrier. The first coupling portion is configured such that a pivotable connection between the movable portion and the first coupling portion is established. The first coupling portion may be configured such that it may be hingedly coupled to the movable portion. For example, the first coupling portion may comprise an opening for accommodating a pivot member, for example a pivot pin or pivot bolt, therein. The pivot member may be coupled rotatably with respect to the coupling portion and/or the movable portion.

The first coupling portion is configured to be movable between a retracted position and an extended position. The extended position corresponds to a position of the first coupling portion, in which the movable portion is in the non-use**,** i.e. opened position. The retracted position may correspond to a position in which the movable portion is in a use position.

The tilting mechanism further comprises a damping mechanism. The damping mechanism is configured to at least partially decelerate or limit a movement speed of the first coupling portion up on moving the same to the extended position. With such a configuration, the first coupling portion may be decelerated, or its movement speed may be limited during its movement to the extended position. In this way, it is prevented that the first coupling portion is stopped too abruptly thereby preventing the generation of a vibrating and/or wobbling movement of the movable portion.

The tilting mechanism further comprises a second coupling portion. The second coupling portion is configured to be coupled to a stationary portion of the load carrier. Such a stationary portion may for example be a base portion of a roof box**.** The second coupling portion is operatively coupled to the first coupling portion by means of an operative coupling. The operative coupling may be a kinematic chain. kinematic chain comprises two link members pivotably coupled to each other.

The link members may also be referred to as arms. In an embodiment, the link members are pivotably coupled to each other at a first end portion thereof. At opposite end portions, the link members may be coupled to or may comprise the first coupling portion and the second coupling portion, respectively. The link members may be elongate rigid bodies.

According to an embodiment, the dampening mechanism may be configured to act on the operative coupling between the first coupling portion and the second coupling portion such that it provides a resistance against the movement of the first coupling portion relative to the second coupling portion at least during movement of the first coupling portion in extension direction. According to the present disclosure, the extension direction is to be understood as a direction in which the first coupling portion moves towards the extended position. A retraction direction may be understood as a direction in which the first coupling member moves towards their retracted position. Accordingly, the first coupling portion may be configured movable against a resistance provided by the dampening mechanism. The dampening mechanism may be configured to provide a resistance force in opposite direction of the travel direction of the first coupling portion. The dampening mechanism may be configured such that it provides a resistance only when said first coupling portion is moved in extension direction. Accordingly, only a movement towards the extended position may be controlled by the dampening mechanism whereas a movement in retraction direction is not influenced by the dampening mechanism. In an embodiment, the dampening mechanism may be configured to act on the movement of the first coupling portion in both directions.

The dampening mechanism may comprise a linear damper. The dampening mechanism may comprise a rotary damper. In an embodiment, the dampening mechanism may comprise a linear damper and a rotary damper.

In an embodiment, the resistance exerted by the dampening mechanism may be adjustable. In some embodiments, the dampening mechanism may be configured to provide a continuous dampening on the movement of the first coupling portion. Accordingly, the dampening mechanism may be configured to be permanently operatively coupled to the first coupling portion. The dampening mechanism may alternatively be configured such that it is only temporarily operatively coupled to the first coupling portion. For example, the dampening mechanism may be configured such that it only acts on the operative coupling between the first coupling portion and the second coupling portion in a specific region of the movement path of the first coupling portion, for example in a region in which the first coupling portion is positioned near the extended position. In such a configuration, the first coupling portion may first move without being controlled by the damping mechanism and may then reach a region in which it is controlled by the damping mechanism during further movement.

According to the invention, the tilting mechanism further comprises an urging mechanism.

The urging mechanism may act on the operative coupling between the first coupling portion and the second coupling portion such that it at least partially applies a force which urges the first coupling portion with respect to the second coupling portion at least in extension direction of the first coupling portion. Accordingly, the urging mechanism may apply a force urging the first coupling portion in extension direction.

Such a configuration may provide an assisting force for moving the movable portion to which the first coupling portion is coupled. In this way, a user may be assisted in moving the movable portion.

In an embodiment, the urging mechanism may act on the operative coupling between the first coupling portion and the second coupling portion such that it at least partially applies a force which urges the first coupling portion with respect to the second coupling portion in retraction direction of the first coupling portion. Accordingly, the urging mechanism may apply a force urging the first coupling portion in retraction direction. Such a configuration may provide an assisting force for moving the movable portion in a direction towards the use position. It is noted that an urging mechanism may be provided which applies a force in extension direction and in retraction direction. A configuration of such an urging mechanism may be such that the direction of the applied force changes at a predetermined position of the first coupling portion.

The urging mechanism comprises a prebiased force application member acting on a cam surface. The urging mechanism may comprise a biasing member, for example a spring such as a metal spring or a gas spring. The force application member is prebiased, for example by the biasing member. The force application member acts on a cam surface, to generate a moment for moving the first coupling portion with respect to the second coupling portion. The cam surface may be integrally formed in an arm or link member on which the first coupling portion is provided. The force application member may be provided in an arm or link member on which the second coupling portion is provided. The force application member may comprise an accommodating portion for receiving the biasing member, for example a recess. The accommodating portion may be configured to receive an end portion of the biasing member therein. In addition or alternatively, the accommodating portion may be configured to at least partially receive members of the dampening mechanism. For example, the biasing member may be a coil spring and the dampening mechanism may comprise a linear damper which may be accommodated in the coil spring such that the coil spring surrounds the linear damper. An end portion of the linear damper may be coupled to the force application member. The force application member may be configured movable linearly towards and away from the second coupling portion.

The dampening mechanism may be operatively coupled to the force application member and may be configured to at least partially decelerate or limit a movement speed of the force application member. In addition or alternatively, the force application member may be configured translatory movable. In addition or alternatively, the dampening mechanism may comprise a linear damper, for example a frictional damper, or a viscous damper such as a dashpot, or a pneumatic cylinder, for example a vacuum chamber with a piston. The dampening mechanism may be accommodated in the force application member.

In addition or alternatively, the dampening mechanism may comprise a rotary damper, for example a frictional damper or the viscous damper. The rotary damper may be operatively coupled to the force application member by means of the gear mechanism. The rotary damper may be operatively coupled to the force application member by means of a cog which is engaged with a toothed portion on the force application member.

The dampening mechanism may be operatively coupled to the first link member and the second link member. The dampening mechanism may comprise a linear damper operatively coupled to the first link member at a first coupling section thereof and operatively coupled to the second link member at a second coupling section thereof.

The dampening mechanism may in addition or alternatively comprise a rotary damper having a housing operatively coupled, for example integrally movably coupled, to the first link member or the second link member, and a rotary shaft, for example a rotary piston, operatively coupled to the other one of the second link member and the first link member. The rotary shaft may be configured such that it forms a pivot pin defining the pivot axis. The cargo box may be a roof box or a rear box. The cargo box is mountable on a vehicle. The cargo box comprises a base portion for supporting goods to be transported. Furthermore, the cargo box may comprise an openable and closable lid which is pivotably mounted on the base portion so as to be movable between a closed position and an opened position.

The cargo box may be configured collapsible. For example, the cargo box may comprise a collapsible lid and/or collapsible base portion which is/are transferable between a collapsed configuration in which a volume of the lid and/or base portion is reduced and a deployed configuration in which a volume of the lid and/or base portion is enlarged.

Additional features and advantages may be gleaned by the person skilled in the art from the following description of exemplary embodiments and the attached drawings.

### BRIEF DESCRIPTION OF THE DRAWINGS

The present disclosure will hereinafter be described in conjunction with the following Figures, wherein like numerals denote like elements. The drawings, which are incorporated herein and form part of the specification, illustrate embodiments and, together with the description, further serve to explain the principles of the embodiments and to enable a person skilled in the art to make and use the embodiments.
Figure 1 shows a perspective view of a load carrier comprising a tilting mechanism according to an embodiment.
Figure 2 shows a perspective view of a tilting mechanism according to an embodiment in a retracted configuration.
Figure 3 shows a side view of the tilting mechanism of Figure 2 in an extended configuration.
Figure 4 shows a sectional side view of a tilting mechanism according to a further embodiment in a retracted configuration.
Figure 5 shows the tilting mechanism as shown in Figure 4 in an extended configuration.
Figure 6 shows a perspective view of a tilting mechanism according to a further embodiment.
Figure 7 shows a perspective view of a tilting mechanism according to another embodiment.
Figure 8 shows a side view of a tilting mechanism according to a further embodiment.
Figure 9 shows an enlarged perspective view of a portion of the tilting mechanism of Figure 8.
Figure 10 shows a side view of a tilting mechanism according to a further embodiment.
Figure 11 shows an enlarged perspective view of a portion of the tilting mechanism of Figure 10.
Figure 12 shows a side view of a tilting mechanism according to a further embodiment.
Figure 13 shows a sectional view of an enlarged portion of the tilting mechanism of Figure 12.
Figure 14 shows a sectional perspective view of a tilting mechanism according to a further embodiment.
Figures 15 and 16 show details of a dampening mechanism as used in the embodiment as shown in Figure 14.
Figure 17 shows a cargo box according to an embodiment.
Figure 18 shows a sectional side view of the cargo box of Figure 17.
Figure 19 shows a bike carrier**,** which is not covered by the claimed invention.
Figure 20 shows a collapsible cargo box according to an embodiment.

All figures are only schematic depictions of exemplary embodiments in which, in particular, distances and dimensional correlations are not presented to scale.

### DETAILED DESCRIPTION OF EMBODIMENTS

The following detailed description is merely exemplary in nature and is not intended to limit application and uses. Furthermore, there is no intention to be bound by any theory presented in the preceding background or summary or the following detailed description.

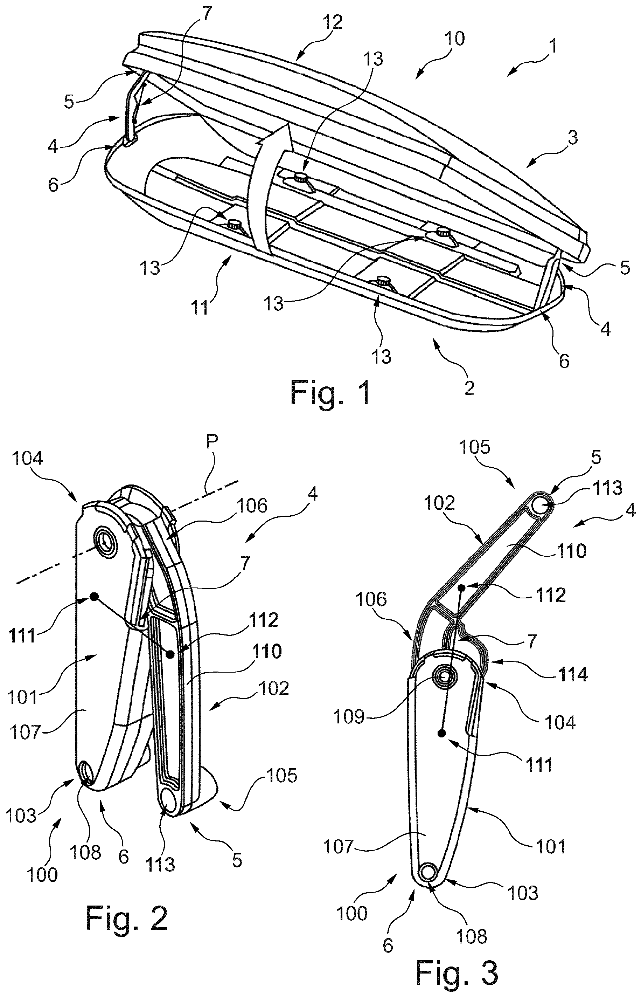

Figure 1 shows a load carrier 1 in a perspective view. The load carrier 1 comprises a movable portion 3 which is pivotably coupled to a stationary portion 2 by means of tilting mechanisms 4. The load carrier 1 is a cargo box, for example a roof box 10 which is mountable on the roof of a vehicle. The roof box 10 comprises an elongate shape and extends in longitudinal direction of the vehicle when the same is mounted on the vehicle. The roof box 10 comprises a base portion 11 defining a stationary portion 2 of the load carrier 1 and an openable and closable lid 12 defining a movable portion 3 of the load carrier 1. The lid 12 is hingedly coupled to a lateral portion of the roof box 10. The roof box 10 comprises optional fixation units 13 provided on the base portion 11 and configured to fixedly engage with a rack system provided on the vehicle. For example, the fixation units 13 may be configured as clamping members which may be brought in clamping engagement with crossbars of the rack system thereby fixedly attaching the roof box 10 on the rack system. In Figure 1, the lid 12 is shown in an opened configuration in which it is moved to an opened position. At a front portion of the roof box 10 and a rear portion of the roof box 10, a tilting mechanism 4 is provided. Each tilting mechanism 4 comprises a first coupling portion 5 which is pivotably coupled to the lid 12. Each tilting mechanism 4 comprises a second coupling portion 6 which is pivotably mounted on the base portion 11. Accordingly, when moving the lid 12 between a closed configuration and the opened configuration, the first coupling portion 5 is moved relative to the second coupling portion 6 towards and away from the same. For example, the first coupling portion 5 is moved relative to the second coupling portion 6 between a retracted position and an extended position. The retracted position of the first coupling portion 5 corresponds to a position of the same at which the lid 12 is in the closed position. The extended position of the first coupling portion 5 corresponds to a position of the same at which the lid 12 is in the opened position. Each tilting mechanism 4 comprises a dampening mechanism 7 which is configured to at least partially decelerate or limit a movement speed of the first coupling portion 5 upon moving the same to the extended position. The second coupling portion 6 is operatively coupled to the first coupling portion by means of an operative coupling. The operative coupling may be a kinematic chain. The first coupling portion 5 is held movable with respect to the second coupling portion 6 along a path having a translatory directional component and a rotatably directional component.

The dampening mechanism 7 may be configured to act on the operative coupling between the first coupling portion 5 and the second coupling portion 6 such that it provides a resistance against the movement of the first coupling portion 5 with respect to the second coupling portion 6. In the present configuration, the dampening mechanism 7 may be configured to provide a resistance against the movement of the first coupling portion 5 at least in extension direction of the first coupling portion 5. In particular, the dampening mechanism 7 may be configured to provide such a resistance only against a movement of the first coupling portion 5 in extension direction. In this way, a configuration may be provided in which the dampening mechanism 7 acts on the movement of the first coupling portion 5 during a movement of the movable member 3 towards a non-use position, which in the present configuration corresponds to a movement of the lid 12 towards the opened position. In this way, the speed of the lid 12 in an opening direction may be controlled, in particular such that a predetermined speed is not exceeded so that when the first coupling portion 5 stops at its extended position, substantially no shock is created on the lid 12 thereby preventing or at least reducing undesired vibrations or a wobbling movement of the lid.

In a modification, a resistance may also be provided against the movement of the first coupling portion 5 in retraction direction of the first coupling portion 5. In this way, a soft closing of the lid 12 may be achieved. It is noted that the dampening mechanism 7 may in some embodiments be configured to continuously apply a resistance. In other words, the dampening mechanism 7 may be provided in the tilting mechanism 4 such that a resistance is applied over the entire movement of the first coupling portion 5.

In some modifications, the dampening mechanism 7 may be configured to apply such resistance only in a specific region of a movement path of the first coupling portion 5. For example, the dampening mechanism 7 may be configured such that a resistance against the movement of the first coupling portion 5 is only provided close to the extended position of the first coupling portion 5. In other words, a configuration may be provided in which in a first region of the movement path of the first coupling portion 5, for example in a movement from the retracted position to a predetermined intermediate position of the first coupling portion 5, no resistance is provided. Accordingly, the lid 12 may be initially movable from the closed configuration towards the opened configuration for a predetermined distance without any influence exerted on the movement by the dampening mechanism 7.

The dampening mechanism 7 may comprise a linear damper and/or a rotary damper. Furthermore, in some embodiments, the resistance exerted by the dampening mechanism may be adjustable. In some embodiments, the dampening mechanism may be configured to provide a continuous dampening. Accordingly, the dampening mechanism 7 may be continuously operatively coupled to the first coupling portion 5 and to the movable portion 3 and may, thus, remain connected with the movable portion 3 at all times. Accordingly, in some embodiments, the movable portion 3 may not be movable without actuating the dampening mechanism 7. The movable portion 3 may thus be under continuous influence of the damping mechanism 7 and may not move independent of the dampening mechanism 7. In some configurations, dampening may also be provided such that a movement speed of the movable portion 3 is maintained substantially constant by the dampening mechanism.

Further details regarding a possible configuration of the tilting mechanism 4 will be described with reference to Figures 2 and 3 in the following. Figure 2 shows the tilting mechanism 4 in a retracted configuration in Figure 3 shows the tilting mechanism 4 of Figure 2 in an extended or deployed configuration. As is shown in Figures 2 and 3, the tilting mechanism 4 comprises the already described first coupling portion 5, the second coupling portion 6 and the dampening mechanism 7.

The tilting mechanism 4 may be configured as a lid lifter. The tilting mechanism 4 is configured as a hinge mechanism. Therefore, in the following, a basic construction of such a hinge mechanism which may be provided in all of these embodiments will be described first. Later, focus of the description will be put on differences between the different configurations.

Embodiments in which the tilting mechanism 4 comprises a hinge mechanism are shown in Figures 2 to 14. Each of the tilting mechanisms 4 comprises a hinge mechanism 100, 200, 300, 400, 500, 600, 700, 800. Each of the hinge mechanisms 100, 200, 300, 400, 500, 600, 700, 800 comprises a first link member 101, 201, 301, 401, 501, 601, 701, 801 and a second link member 102, 202, 302, 402, 502, 602, 702, 802 coupled to each other pivotable about a pivot axis P. The second link member 102, 202, 302, 402, 502, 602, 702, 802 is movable relative to the first link member 101, 201, 301, 401, 501, 601, 701, 801 between a retracted position and an extended position. The first coupling portion 5 is provided on the second link member 102, 202, 302, 402, 502, 602, 702, 802 and the second coupling portion 6 is provided on the first link member 101, 201, 301, 401, 501, 601, 701, 801.

Each first link member 101, 201, 301, 401, 501, 601, 701, 801 comprises a first end portion 103, 203, 303, 403, 503, 603, 703, 803 and a second end portion 104, 204, 304, 404, 504, 604, 704, 804. The second coupling portion 6 is defined in each first end portion 103, 203, 303, 403, 503, 603, 703, 803 of the first link member 101, 201, 301, 401, 501, 601, 701, 801. For that, an opening 108, 208, 308, 408, 508, 608, 708, 808 is provided in the first end portion 103, 203, 303, 403, 503, 603, 703, 803. Each first link member is pivotably coupled to a stationary portion 2 by means of a suitable fixation member which is inserted in the opening 108, 208, 308, 408, 508, 608, 708, 808. Each second end portion 104, 204, 304, 404, 504, 604, 704, 804 is configured to be coupled to the second link member.

Each second link member 102, 202, 302, 402, 502, 602, 702, 802 comprises a first end portion 105, 205, 305, 405, 505, 605, 705, 805 at which the first coupling portion 5 is defined, for example by means of openings 113, 213, 313, 413, 513, 613, 713. Each second link member is pivotably coupled to the movable portion 3 by means of a suitable fixation member which is inserted in the respective opening and coupled to the movable portion 3. Furthermore, each second link member 102, 202, 302, 402, 502, 602, 702, 802 comprises a second end portion 106, 206, 306, 406, 506, 606, 706, 806 which is configured to be pivotably coupled to the first link member. The coupling between the first link member and the second link member may be provided by means of a pivot pin 109, 209, 509, 609, 709, for instance, wherein each pivot pin may define the pivot axis P. Each second link member 102, 202, 302, 402, 502, 602, 702, 802 may comprise a solid arm 110, 210, 310, 410, 510, 610, 710, 810 which may be formed by molding, for example by molding a plastics material. Each first link member 101, 201, 301, 401, 501, 601, 701, 801 may comprise a housing portion 107, 207, 307, 407, 507, 607, 707, 807. The housing portion may be configured to at least partially accommodate a second end portion of the second link member. For that, the housing may be configured with a fork like end portion of having two prongs between which the second end portion of the second link member may be accommodated.

In some embodiments, the dampening mechanism 7 may be coupled to the first link member at a first coupling section 111 and to the second link member 102 at a second coupling section 112. The first coupling section 111 may be provided on the housing portion 107. The dampening mechanism 7 may be provided on an outer portion of the hinge mechanism 100. The dampening mechanism 7 may be provided as a separate unit which is arranged exterior to the hinge mechanism 100 and is coupled to outer portions of the hinge mechanism 100. Such a configuration allows retrofitting a dampening mechanism 7 with existing hinge mechanisms such as lid lifters to provide a lifting mechanism according to the present disclosure. On the other hand, it is also possible to integrate a dampening mechanism 7 into a hinge mechanism.

The dampening mechanism 7 may be configured as a frictional damper, a viscous damper, or as a pneumatic cylinder, for example a vacuum chamber with a piston.

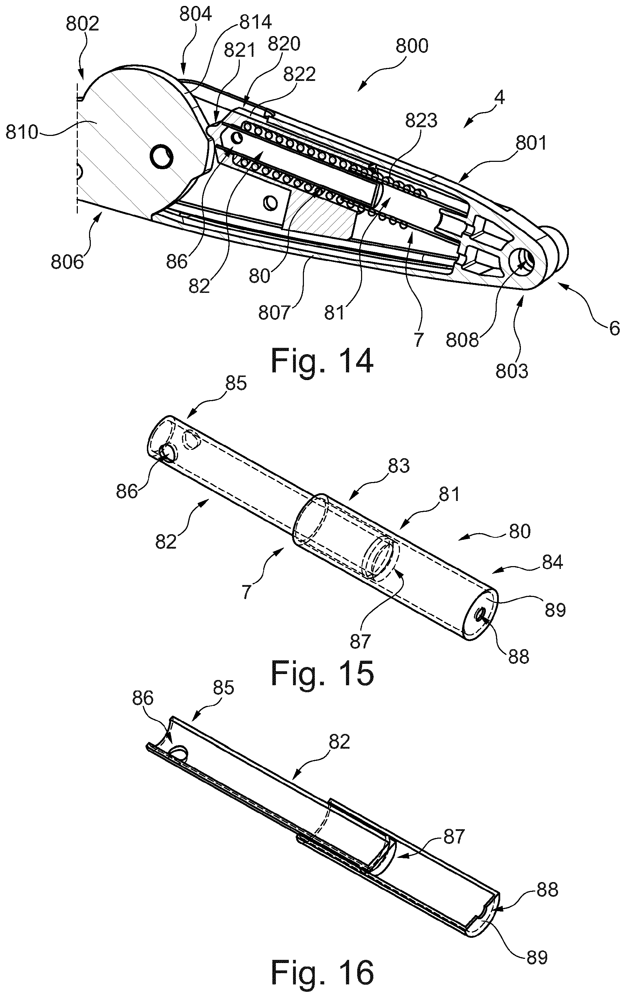

The dampening mechanism may comprise a linear damper 80, for example a dashpot (not shown) or a pneumatic cylinder as shown in Figures 15 and 16. The linear damper 80 comprises a cylindrical portion 81 in which a piston 82 is linearly movably arranged. The cylindrical portion 81 comprises a first end portion 83 and a second end portion 84. An opening for receiving the piston 82 is provided in the first end portion. The second end portion 84 comprises a wall 89 limiting an interior space of the cylindrical portion 81 at the second end portion 84. An opening 88 is provided in the wall 89. The dimension of the opening may be changeable for adjusting a resistance of the linear damper 80. Accordingly, an outside of the linear damper 80 is fluidly coupled to an interior space of the cylindrical portion 81. In particular, air is able to pass through the opening 88. The piston 82 comprises a first end portion 85 comprising a fixation opening 86. Although a fixation opening 86 is shown, the first end portion 85 may be configured differently and may comprise another configuration allowing a fixation of the first end portion 85. A second end portion 87 of the piston 82 is slidably received in the cylindrical portion 81. Accordingly, a movement of the piston towards and away from the wall 89 leads to a compression of air inside the cylindrical portion 81 or creates a negative pressure within the cylindrical portion 81. Consequently, the piston 82 resists a movement in both directions. In a modification, the configuration can be such that the piston 82 only resists a movement in one direction. Such a configuration may be achieved by providing a suitable valve arrangement in which passing of air in one direction is easily possible and limited in the other direction. Although not shown, the second end portion 84 may be configured to be fixedly coupled to the second coupling portion 6. For example, in an embodiment, the second end portion 84 may be configured to be coupled to the first coupling section 111 of the first link member 101. The first end portion 85 may be configured to be coupled to the first coupling portion 5. For example, in an embodiment, the first end portion 85 may be configured to be coupled to the second coupling portion 112 of the second link member 102. An inverted arrangement is however also possible.

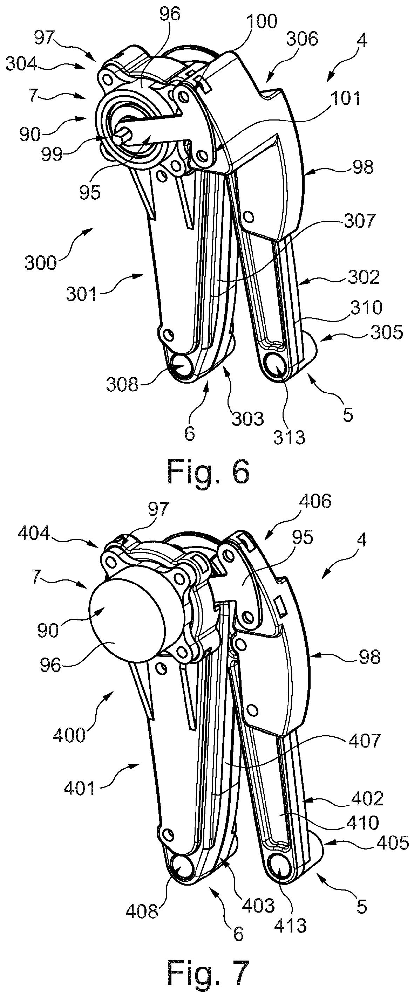

In addition or alternatively, the dampening mechanism may comprise a rotary damper 90. The rotary damper 90 may be a frictional damper or a viscous damper. Embodiments in which a rotary damper 90 is used are shown in Figures 6 to 13.

The rotary damper 90 may comprise a fixed portion such as a housing 96. The housing 96 may be configured so as to be operatively coupled to the second coupling portion 6. In some embodiments, the housing 96 is configured to be fixedly coupled to the first link member 301, 401, 501, 701. For that, the housing 96 may comprise a flange 97 as shown for example in Figures 6 and 7.

Furthermore, the rotary damper 90 may comprise a rotary shaft 99 which is operatively coupled to the housing 96 such that it resists a movement, for example frictionally coupled or coupled via a viscous fluid. The rotary shaft may be a rotary piston which is in fluid connection with a viscous fluid inside the housing 96. In particular, a first end portion of the rotary piston may be in fluid connection with the viscous fluid and an opposite second end portion may comprise a fixation section. The second end portion of the rotary shaft 29 is operatively coupled to the first coupling portion 5. Although not shown in the embodiments, the second end portion of the rotary shaft 99 may form a pivot pin of the hinge mechanisms as described before and may for example define the pivot pin 109 as shown in Figure 3. In such a configuration, the second link member 102 may be directly supported on the rotary shaft 99. Alternatively, the second end portion of the rotary shaft 99 may be operatively coupled to the first coupling section 5 by means of a force transfer member 95. The force transfer member 95 may comprise a T shape as is shown in Figure 6. In the force transfer member 95 may be coupled to the rotary shaft 99 at a first end portion thereof and may be coupled to the first coupling portion 5 by means of fixation sections 100, 101 thereof. The fixation sections may be coupled to a coupling portion 98 which is operatively coupled to the first coupling portion 5, for example by being fixed to a second link member of the before described link members, for example the second link member 302. In the configuration as shown in Figure 6, the housing 96 of the rotary damper 90 is arranged between the force transfer member and the first link member 301. However, as is shown in Figure 7, an arrangement may be provided in which the rotary damper 90 is inversely arranged so that the force transfer member 95 is arranged between the housing 96 and the first link member 401.

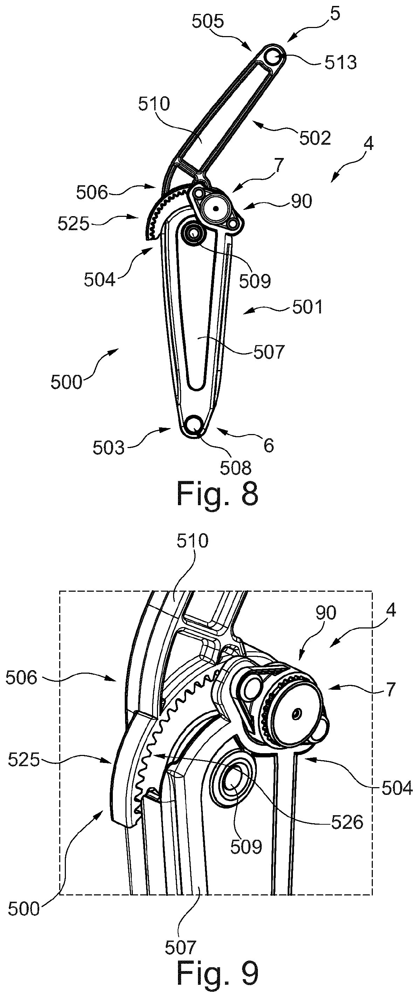

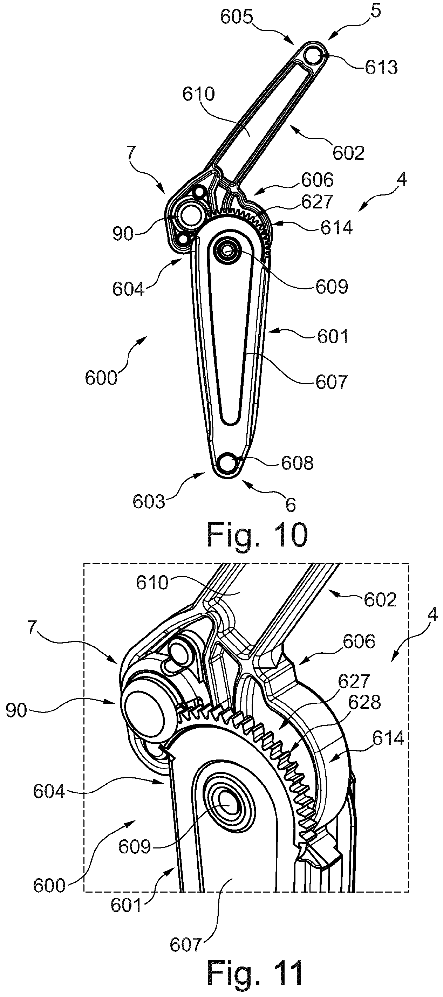

Instead of the force transfer member 95 as shown in Figure 6, the rotary shaft 99 may be operatively coupled by means of a gear mechanism. Figure 8 shows an embodiment in which the housing of the rotary damper is fixed on a second end portion 504 of the first link member 501. Although not shown in Figure 8, a gear is fixedly coupled on the rotary shaft 99. The toothed portion 525 comprising teeth 526, is provided on the second end portion 506 of the second link member 502. The gear is engaged with the toothed portion 525. The toothed portion 525 comprises the shape of a segment of the circle which extends about the pivot axis P and the pivot pin 509. Accordingly, the rotary shaft 99 may be arranged in parallel with the pivot pin 509 so that an extension direction of the rotary shaft 99 is in parallel with the pivot axis P. An inverse arrangement is shown in Figures 10 and 11. In this configuration, the rotary damper 90 is provided on the second end portion 606 of the second link member 602. A toothed portion 627 comprising teeth 628 is provided on the second end portion 604 of the first link member 601. For example, the toothed portion 627 may be integrally formed in the housing, for example in the above-described fork like end portion, more precisely in a free end of one of the two prongs between which the second end portion of the second link member may be accommodated. Again, the rotary shaft 99 is in engagement with the toothed portion 627 by means of a gear (not shown) which is in engagement with the toothed portion 627.

In some embodiments, the housing portion may be configured to support and/or accommodate an urging mechanism. In some embodiments, the housing portion may be configured of to accommodate the dampening mechanism. In some configurations, the housing portion may be configured to accommodate an urging mechanism and a dampening mechanism.

The urging mechanism is configured to apply an urging force, for example on the second link member, for example on a force receiving surface 114, 214, 614, 714, 814 provided on the second link member. The force receiving surface is configured as a cam surface. The urging mechanism may be configured such that the force application member is in sliding contact with the force receiving surface. The urging mechanism may be configured to at least apply an urging force on the second link member urging the second link member in an extension direction. Such an urging mechanism may assist the user in opening the lid. Furthermore, such an urging mechanism may ensure that the lid remains in an opened configuration. In a modification, the urging mechanism may be configured such that an urging force is provided in extension direction and retraction direction. For that, the cam surface may be specifically shaped, and the force application member configured such that a moment created on the second link member by the force applied on the force receiving surface is reversed as soon as the second link member passes a predetermined intermediate position. In this way, an assisting force may be created in both movement directions of the second link member.

The dampening mechanism may be configured such that it at least provides a resistance when an urging force is applied on the second link member. In other words, an urging force and a resistance on the second link member may be simultaneously applied in order to provide a controlled movement of the second link member.

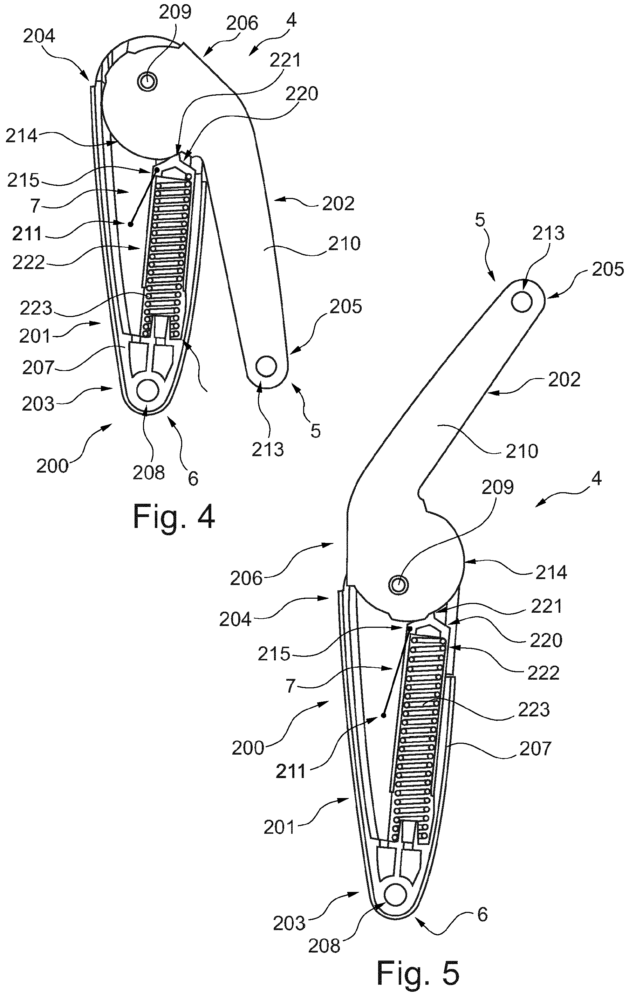

A possible configuration of the force application members 220, 720, 820 is shown in Figures 4, 5, 13 and 14. The force application members are accommodated in the first link member 201, 701, 801. The force application member 220, 720, 820 may comprise a force application portion 221, 721, 821 which is configured to be in sliding contact with the force receiving surfaces 214, 714, 814 and configured to apply in urging force on these surfaces. The force application members 220, 720, 820 are prebiased towards the force receiving surfaces by an urging member or biasing member, for example a spring 223, 723, 823. Each force application member 220, 720, 820 may comprise an accommodating section 222, 722, 822 which may be formed as a hollow cylindrical portion. The accommodating section is configured to receive at least a portion of the urging member or biasing member. An opposite end of the urging or biasing member may be supported in the first end portion 201, 701, 801. Furthermore, the accommodating section may serve as a guiding section which is in sliding contact with the housing portion 207, 707, 807. Accordingly, the force application members are configured to continuously apply an urging force on the receiving surfaces.

In some embodiments, the dampening mechanism 7 may be configured to be operatively connected to the force application members 220, 720, 820. In other words, the dampening mechanisms 7 may be configured to influence a movement of the force application members 220, 720, 820.

For example, in the configuration as shown in Figures 4 and 5, the dampening mechanism 7 may be operatively coupled to the force application member 220 at a first coupling section 215 and may be coupled to the housing 207, more precisely an interior portion of the housing 207, at a second coupling section 211. Accordingly, a resistance force may be applied on the force application member 220 such that a movement speed of the same towards the force receiving section is controlled. In this configuration, the dampening mechanism 7 may be a linear damping mechanism, for example a dashpot.

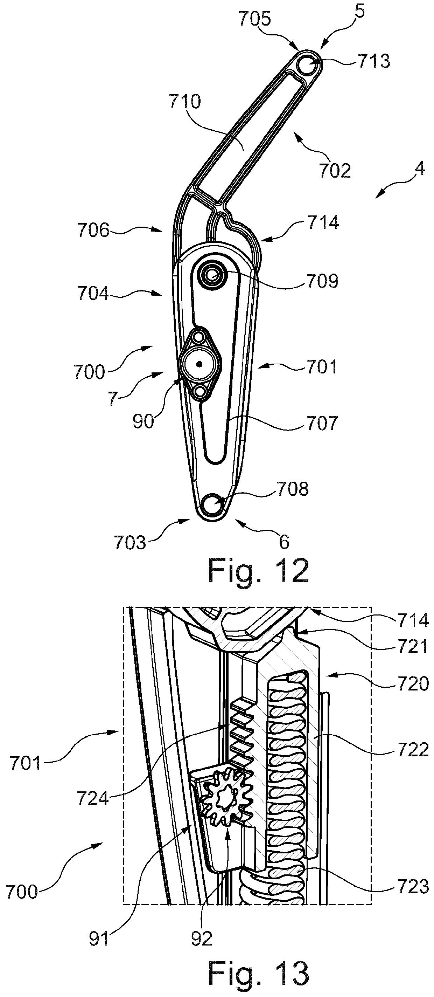

In a further configuration as shown in Figure 13, a rotary damper 90 may be operatively coupled to the force application member 720 by means of a gear mechanism 91. The gear mechanism 91 comprises a gear or cog 92 which is fixedly coupled to a rotary shaft of the rotary damper 90. A toothed portion 724 is provided on the force application portion 720, for example on an outer surface of accommodating section 722. As is shown in Figure 12, the rotary damper 19 may be provided in a middle section of the first link member 701. Again, a configuration is achieved in which a movement speed of the force application member 720 is controlled by a dampening mechanism 7.

Figure 14 shows an embodiment in which a linear damper 80 is integrated into the force application member 820. As is shown, the linear damper 18 may be configured as already described with respect to Figures 15 and 16. The piston 82 is coupled to the force application member 820 using the fixation opening 86. The second end portion 84 of the linear damper 80 is fixedly supported in the first end portion 803 of the first link member 801. As is also shown, the spring 823 is provided on the linear damper 80. Accordingly, the linear damper 80 may serve as a guiding portion or support for the spring 823. Furthermore, the piston 82 is at least partially accommodated in the accommodating section 822. Again, a configuration is achieved in which a movement speed of the force application member 820 is controlled by a dampening mechanism 7.

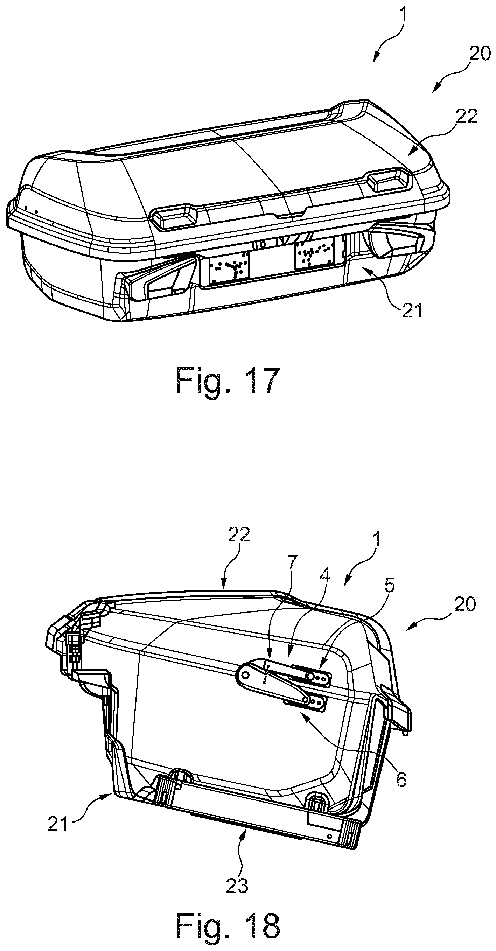

The tilting mechanism 4 may be used in various kinds of load carriers 1. For example, the tilting mechanism 4 may be provided in a cargo box mountable to the rear of the vehicle as shown in Figures 17 and 18. Such a rear box 20 is shown in Figure 17 and may comprise a base portion 21 for supporting goods to be transported and an openable and closable lid 22 which is pivotably mounted to the base portion 21. The first coupling portion 5 is coupled to the lid 22 and the second coupling portion 6 is coupled to the base portion 21. The base portion may comprise a coupling section 23 for mounting the rear box 20 on a supporting frame which is coupled to our couplable to the rear of a vehicle.

Furthermore, the tilting mechanism 4 may be used **,** in an embodiment which is not covered by the claimed invention, on load carriers 40 comprising a pivotable support platform 42 as movable portion 3 which is pivotably mounted to a base 41, for example a frame structure comprising frame members 44, 45. The base 41 may be couplable to a vehicle by means of a coupling portion 43 which may be configured to be engaged with a hitch or fix point structure provided on the vehicle. The load carrier 40 may be a bike carrier. In such a configuration, the pivotable support platform 42 may be configured to support bikes thereon. The support platform 42 may be coupled to the base 41 by means of the tilting mechanism 4 as described before. In particular, the tilting mechanism 4 may comprise a linear damper 80 as described before. The tilting mechanism 4 may be coupled to the base 41 at a second coupling portion 6 and may be coupled to the movable portion 3 via the first coupling portion 5 thereof. The tilting mechanism 4 may comprise a hinge mechanism as described before. The tilting mechanism 4 may alternatively only comprise a rotary damper 90 which couples the movable portion 3 to the base 41. For example, a rotary shaft of the rotary damper 90 may be coupled to the base 41 and a housing of the rotary damper 90 may be coupled to the movable portion 3. Accordingly, a load carrier, in particular bike carrier, with a movable platform and an integrated rotary damper 90 may be provided.

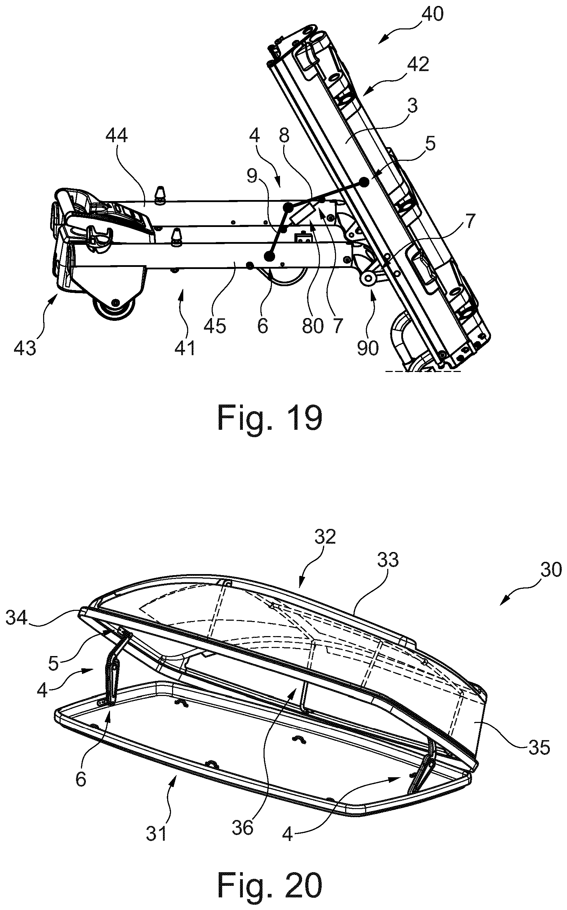

The tilting mechanism 4 as described above may also be used in a collapsible cargo box as is shown in Figure 20. The cargo box is configured as a roof box 30 and comprises a base portion 31 and an openable and closable lid 32. The lid 32 comprises a first lid portion 33 and a second lid portion 34 which are hingedly coupled at a front portion of the lid 32. The first lid portion 33 is movable between a deployed configuration as shown in Figure 20 and a retracted configuration in which the first lid portion 33 is moved towards the second lid portion 34. A flexible material 35 such as a fabric is coupled to edge portions of the first lid portion 33 and the second lid portion 34. The flexible material 35 creates a sidewall of the lid 32 when the same is in deployed configuration as shown in Figure 20. The lid 32 comprises an operating mechanism 36 which is configured to transfer the first lid portion 33 between the retracted configuration and the deployed configuration. The tilting mechanism as described before may be configured to couple the base portion 31 with the lid 32, in particular with the second lid portion 34. The first coupling portion 5 is pivotably coupled to the lid 32 and the second coupling portion 6 is pivotably coupled to the base portion 31.

## Claims

1. Cargo box (10; 20), for example a roof box (10) or a rear box (20), said cargo box being mountable on a vehicle and comprising
a base portion (11; 21) for supporting goods to be transported,
an openable and closeable lid (12; 22) pivotably mounted on said base portion (11; 21),
a lid lifter being configured to couple said openable and closeable lid (12; 22) on said base portion (11; 21),
said lid lifter comprising a tilting mechanism (4) being configured to assist a tilting movement of said openable and closeable lid (12; 22) at least into an opened position thereof,
said tilting mechanism (4) comprising
a hinge mechanism (200; 700; 800) comprising a pivotable first link member (201; 701; 801) and a pivotable second link member (202; 702; 802) coupled to each other pivotable about a pivot axis (P),
a first coupling portion (5) provided on said second link member (202; 702; 802) and pivotably coupled to said openable and closeable lid (12; 22),
a second coupling portion (6) provided on said first link member (201; 701; 801) and coupled to said base portion (11; 21),
said second link member (202; 702; 802) being movable relative to said first link member between a retracted position corresponding to a closed position of said lid (12; 22) and an extended position corresponding to said opened position of said lid (12; 22),
an urging mechanism comprising a prebiased force application member (220; 720; 820) acting on a cam surface (214; 714; 814) to generate a moment for moving said first coupling portion (5) with respect to said second coupling portion (6), and
a damping mechanism (7) configured to at least partially decelerate or limit a movement speed of said second link member upon moving the same to said extended position so as to reduce a vibration of said lid (12; 22) at said opened position.

2. Cargo box (10; 20) according to claim 1,
wherein said damping mechanism (7) is configured to provide a resistance against said movement of said second link member with respect to said first link member at least during movement of said second link member in extension direction, for example only during movement of said second link member in extension direction or for example during movement of said second link member in extension direction and retraction direction,
wherein said damping mechanism may comprise a linear damper (80) and/or a rotary damper (90), and
wherein in addition or alternatively a resistance exerted by said damping mechanism may be adjustable,
wherein in addition or alternatively said damping mechanism may be configured to provide a continuous damping.

3. Cargo box (10; 20) according to claim 2,
wherein said urging mechanism acts on said cam surface (214; 714; 814) such that it at least partially applies a force which urges said first coupling portion (5) with respect to said second coupling portion (6) at least in extension direction of said first coupling portion (5), and
wherein in addition or alternatively said urging mechanism acts on said cam surface (214; 714; 814) such that it at least partially applies a force which urges said first coupling portion (5) with respect to said second coupling portion (6) in retraction direction of said first coupling portion (5),
wherein in addition or alternatively said urging mechanism comprises a spring (723), for example a metal spring or a gas spring.

4. Cargo box (10; 20) according to claim 3,
wherein said damping mechanism (7) is operatively coupled to said force application member (720) and configured to at least partially decelerate or limit a movement speed of said force application member (720),
wherein in addition or alternatively said force application member (720) may be configured translatory movable,
wherein in addition or alternatively said damping mechanism may comprise a linear damper (80), for example a frictional damper, or a viscous damper such as a dashpot, or a pneumatic cylinder, for example a vacuum chamber with a piston, wherein said damping mechanism may be accommodated in said force application member (720),
wherein in addition or alternatively said damping mechanism may comprise a rotary damper (90), for example a frictional damper or a viscous damper,
wherein said rotary damper (90) may be operatively coupled to said force application member (720) by means of a gear mechanism (91), wherein said rotary damper (90) may be operatively coupled to said force application member (720) by means of a cog (92) which is engaged with a toothed portion (724) on said force application member (720).

5. Cargo box (10; 20) according to one of claims 1 to 4,
wherein said damping mechanism (7) is operatively coupled to said first link member (201; 701; 801) and said second link member (202; 702; 802).

6. Cargo box (10; 20) according to claim 5,
wherein said damping mechanism (7) comprises a linear damper operatively coupled to said first link member (201; 701; 801) at a first coupling section (111) thereof and operatively coupled to said second link member (202; 702; 802) at a second coupling section (112) thereof.

7. Cargo box (10; 20) according to claim 5,
wherein said damping mechanism comprises a rotary damper (90) having
a housing (96) operatively coupled, for example integrally movably coupled, to said first link member (201; 701; 801) or said second link member (202; 702; 802), and
a rotary shaft (99), for example a rotary piston, operatively coupled to the other one of said second link member (202; 702; 802) and said first link member (201; 701; 801),
wherein said rotary shaft (99) may be configured such that it forms a pivot pin defining said pivot axis (P) or such that it is coaxial with said pivot axis, for example such that said second link member may be directly supported on said rotary shaft (99).

8. Cargo box (30) according to one of claims 1 to 7, wherein said cargo box is configured collapsible, for example by providing a collapsible lid (32) and/or a collapsible base portion which is/are transferable between a collapsed configuration in which a volume of said lid and/or base portion is reduced and a deployed configuration in which a volume of said lid and/or base portion is enlarged.

## Patentansprüche

1. Ladungsbox (10; 20), zum Beispiel eine Dachbox (10) oder eine Heckbox (20), wobei die Ladungsbox an einem Fahrzeug montierbar ist und umfasst
einen Basisabschnitt (11; 21) zum Stützen von zu transportierenden Gütern,
einen öffenbaren und schließbaren Deckel (12; 22), der an dem Basisabschnitt (11; 21) schwenkbar montiert ist,
einen Deckelheber, der konfiguriert ist, um den öffenbaren und schließbaren Deckel (12; 22) an den Basisabschnitt (11; 21) zu koppeln,
der Deckelheber umfassend einen Kippmechanismus (4), der konfiguriert ist, um eine Kippbewegung des öffenbaren und schließbaren Deckels (12; 22) mindestens in eine geöffnete Position davon zu unterstützen,
der Kippmechanismus (4) umfassend
einen Gelenkmechanismus (200; 700; 800), umfassend ein schwenkbares erstes Verbindungsbauteil (201; 701; 801) und ein schwenkbares zweites Verbindungsbauteil (202; 702; 802), die um eine Schwenkachse (P) herum schwenkbar miteinander gekoppelt sind,
ein erster Kopplungsabschnitt (5), der an dem zweiten Verbindungsbauteil (202; 702; 802) bereitgestellt und mit dem öffenbaren und schließbaren Deckel (12; 22) schwenkbar gekoppelt ist,
einen zweiten Kopplungsabschnitt (6), der an dem ersten Verbindungsbauteil (201; 701; 801) bereitgestellt und mit dem Basisabschnitt (11; 21) gekoppelt ist,
wobei das zweite Verbindungsbauteil (202; 702; 802) relativ zu dem ersten Verbindungsbauteil zwischen einer eingefahrenen Position, die einer geschlossenen Position des Deckels (12; 22) entspricht, und einer ausgefahrenen Position, die der geöffneten Position des Deckels (12; 22) entspricht, bewegbar ist,
einen Drängmechanismus, umfassend ein vorgespanntes Kraftaufbringungsbauteil (220; 720; 820), das auf eine Nockenoberfläche (214; 714; 814) einwirkt, um ein Moment zum Bewegen des ersten Kopplungsabschnitts (5) in Bezug auf den zweiten Kopplungsabschnitt (6) zu erzeugen, und
einen Dämpfungsmechanismus (7), der konfiguriert ist, um eine Bewegungsgeschwindigkeit des zweiten Verbindungsbauteils bei dem Bewegen desselben in die ausgefahrene Position mindestens teilweise zu verlangsamen oder zu begrenzen, um eine Vibration des Deckels (12; 22) in der geöffneten Position zu verringern.

2. Ladungsbox (10; 20) nach Anspruch 1,
wobei der Dämpfungsmechanismus (7) konfiguriert ist, um einen Widerstand gegen die Bewegung des zweiten Verbindungsbauteils in Bezug auf das erste Verbindungsbauteil mindestens während der Bewegung des zweiten Verbindungsbauteils in Ausfahrrichtung, zum Beispiel nur während der Bewegung des zweiten Verbindungsbauteils in Ausfahrrichtung oder zum Beispiel während der Bewegung des zweiten Verbindungsbauteils in Ausfahrrichtung und Einfahrrichtung, bereitzustellen,
wobei der Dämpfungsmechanismus einen Lineardämpfer (80) und/oder einen Rotationsdämpfer (90) umfassen kann, und
wobei zusätzlich oder alternativ ein Widerstand, der durch den Dämpfungsmechanismus ausgeübt wird, einstellbar sein kann,
wobei zusätzlich oder alternativ der Dämpfungsmechanismus konfiguriert sein kann, um eine kontinuierliche Dämpfung bereitzustellen.

3. Ladungsbox (10; 20) nach Anspruch 2,
wobei der Drängmechanismus auf die Nockenoberfläche (214; 714; 814) derart einwirkt, dass er mindestens teilweise eine Kraft aufbringt, die den ersten Kopplungsabschnitt (5) in Bezug auf den zweiten Kopplungsabschnitt (6) mindestens in Ausfahrrichtung des ersten Kopplungsabschnitts (5) drängt, und
wobei zusätzlich oder alternativ der Drängmechanismus auf die Nockenoberfläche (214; 714; 814) derart einwirkt, dass er mindestens teilweise eine Kraft aufbringt, die den ersten Kopplungsabschnitt (5) in Bezug auf den zweiten Kopplungsabschnitt (6) in Einfahrrichtung des ersten Kopplungsabschnitts (5) drängt,
wobei zusätzlich oder alternativ der Drängmechanismus eine Feder (723), zum Beispiel eine Metallfeder oder eine Gasfeder, umfasst.

4. Ladungsbox (10; 20) nach Anspruch 3,
wobei der Dämpfungsmechanismus (7) mit dem Kraftaufbringungsbauteil (720) wirkgekoppelt und konfiguriert ist, um eine Bewegungsgeschwindigkeit des Kraftaufbringungsbauteils (720) mindestens teilweise zu verlangsamen oder zu begrenzen,
wobei zusätzlich oder alternativ das Kraftaufbringungsbauteil (720) translatorisch bewegbar konfiguriert sein kann,
wobei zusätzlich oder alternativ der Dämpfungsmechanismus einen Lineardämpfer (80), zum Beispiel einen Reibungsdämpfer, oder einen viskosen Dämpfer wie einen Stoßdämpfer, oder einen Pneumatikzylinder, zum Beispiel eine Vakuumkammer mit einem Kolben, umfassen kann, wobei der Dämpfungsmechanismus in dem Kraftaufbringungsbauteil (720) aufgenommen sein kann,
wobei zusätzlich oder alternativ der Dämpfungsmechanismus einen Rotationsdämpfer (90), zum Beispiel einen Reibungsdämpfer oder einen viskosen Dämpfer, umfassen kann,
wobei der Rotationsdämpfer (90) mittels eines Getriebemechanismus (91) mit dem Kraftaufbringungsbauteil (720) wirkgekoppelt sein kann, wobei der Rotationsdämpfer (90) mittels eines Zahnrads (92) mit dem Kraftaufbringungsbauteil (720) wirkgekoppelt sein kann, das mit einem verzahnten Abschnitt (724) an dem Kraftaufbringungsbauteil (720) in Eingriff steht.

5. Ladungsbox (10; 20) nach einem der Ansprüche 1 bis 4,
wobei der Dämpfungsmechanismus (7) mit dem ersten Verbindungsbauteil (201; 701; 801) und dem zweiten Verbindungsbauteil (202; 702; 802) wirkgekoppelt ist.

6. Ladungsbox (10; 20) nach Anspruch 5,
wobei der Dämpfungsmechanismus (7) einen Lineardämpfer, der mit dem ersten Verbindungsbauteil (201; 701; 801) an einem ersten Kopplungsabschnitt (111) davon wirkgekoppelt ist und mit dem zweiten Verbindungsbauteil (202; 702; 802) an einem zweiten Kopplungsabschnitt (112) davon wirkgekoppelt ist, umfasst.

7. Ladungsbox (10; 20) nach Anspruch 5,
wobei der Dämpfungsmechanismus einen Rotationsdämpfer (90) umfasst, der aufweist
ein Gehäuse (96), das mit dem ersten Verbindungsbauteil (201; 701; 801) oder dem zweiten Verbindungsbauteil (202; 702; 802), zum Beispiel integral bewegbar gekoppelt, wirkgekoppelt ist, und
eine Rotationswelle (99), zum Beispiel ein Rotationskolben, der mit dem anderen des zweiten Verbindungsbauteils (202; 702; 802) und des ersten Verbindungsbauteils (201; 701; 801) wirkgekoppelt ist,
wobei die Rotationswelle (99) derart konfiguriert sein kann, dass sie einen Schwenkzapfen ausbildet, der die Schwenkachse (P) definiert, oder derart, dass sie koaxial zu der Schwenkachse ist, zum Beispiel derart, dass das zweite Verbindungsbauteil direkt auf der Rotationswelle (99) gestützt sein kann.

8. Ladungsbox (30) nach einem der Ansprüche 1 bis 7, wobei die Ladungsbox zusammenklappbar konfiguriert ist, zum Beispiel durch Bereitstellen eines zusammenklappbaren Deckels (32) und/oder eines zusammenklappbaren Basisabschnitts, der/die zwischen einer zusammengeklappten Konfiguration, in der ein Volumen des Deckels und/oder des Basisabschnitts verringert ist, und einer entfalteten Konfiguration, in der ein Volumen des Deckels und/oder des Basisabschnitts vergrößert ist, überführbar ist/sind.

## Revendications

1. Coffre de chargement (10 ; 20), par exemple un coffre de toit (10) ou un coffre arrière (20), ledit coffre de chargement pouvant être monté sur un véhicule et comprenant
une partie de base (11 ; 21) destinée à supporter des marchandises à transporter,
un couvercle (12 ; 22) pouvant être ouvert et fermé monté de manière pivotante sur ladite partie de base (11 ; 21),
un dispositif de levage de couvercle étant conçu pour accoupler ledit couvercle pouvant être ouvert et fermé (12 ; 22) sur ladite partie de base (11 ; 21),
ledit dispositif de levage de couvercle comprenant un mécanisme d'inclinaison (4) conçu pour assister un mouvement d'inclinaison dudit couvercle (12 ; 22) pouvant être ouvert et fermé au moins dans une position ouverte de celui-ci,
ledit mécanisme d'inclinaison (4) comprenant
un mécanisme de charnière (200 ; 700 ; 800) comprenant un premier élément de liaison pivotant (201 ; 701 ; 801) et un second élément de liaison pivotant (202 ; 702 ; 802) accouplés l'un à l'autre de manière à pouvoir pivoter autour d'un axe de pivotement (P),
une première partie d'accouplement (5) prévue sur ledit second élément de liaison (202 ; 702 ; 802) et accouplée de manière pivotante audit couvercle (12 ; 22) pouvant être ouvert et fermé,
une seconde partie d'accouplement (6) prévue sur ledit premier élément de liaison (201 ; 701 ;
801) et accouplé à ladite partie de base (11 ; 21),
ledit second élément de liaison (202 ; 702 ; 802) étant mobile par rapport audit premier élément de liaison entre une position rétractée correspondant à une position fermée dudit couvercle (12 ; 22) et une position étendue correspondant à ladite position ouverte dudit couvercle (12 ; 22),
un mécanisme de sollicitation comprenant un élément d'application de force précontraint (220 ; 720 ; 820) agissant sur une surface de came (214 ; 714 ; 814) pour générer un moment afin de déplacer ladite première partie d'accouplement (5) par rapport à ladite seconde partie d'accouplement (6), et
un mécanisme d'amortissement (7) conçu pour au moins partiellement décélérer ou limiter une vitesse de déplacement dudit second élément de liaison lors du déplacement de celui-ci vers ladite position étendue de manière à réduire une vibration dudit couvercle (12 ; 22) à ladite position ouverte.

2. Coffre de chargement (10 ; 20) selon la revendication 1,
dans lequel ledit mécanisme d'amortissement (7) est conçu pour fournir une résistance contre ledit mouvement dudit second élément de liaison par rapport audit premier élément de liaison au moins pendant le mouvement dudit second élément de liaison dans la direction d'extension, par exemple uniquement pendant le mouvement dudit second élément de liaison dans la direction d'extension ou par exemple pendant le mouvement dudit second élément de liaison dans la direction d'extension et la direction de rétraction,
dans lequel ledit mécanisme d'amortissement peut comprendre un amortisseur linéaire (80) et/ou un amortisseur rotatif (90), et
dans lequel en outre ou à titre alternatif une résistance exercée par ledit mécanisme d'amortissement peut être réglable,
dans lequel, en outre ou à titre alternatif, ledit mécanisme d'amortissement peut être conçu pour fournir un amortissement continu.

3. Coffre de chargement (10 ; 20) selon la revendication 2,
dans lequel ledit mécanisme de sollicitation agit sur ladite surface de came (214 ; 714 ; 814) de telle sorte qu'il applique au moins partiellement une force qui sollicite ladite première partie d'accouplement (5) par rapport à ladite seconde partie d'accouplement (6) au moins dans la direction d'extension de ladite première partie d'accouplement (5), et
dans lequel, en outre ou à titre alternatif, ledit mécanisme de sollicitation agit sur ladite surface de came (214 ; 714 ; 814) de telle sorte qu'il applique au moins partiellement une force qui sollicite ladite première partie d'accouplement (5) par rapport à ladite seconde partie d'accouplement (6) dans la direction de rétraction de ladite première partie d'accouplement (5),
dans lequel, en outre ou à titre alternatif, ledit mécanisme de sollicitation comprend un ressort (723), par exemple un ressort métallique ou un ressort à gaz.

4. Coffre de chargement (10 ; 20) selon la revendication 3,
dans lequel ledit mécanisme d'amortissement (7) est accouplé de manière fonctionnelle audit élément d'application de force (720) et conçu pour décélérer ou limiter au moins partiellement une vitesse de déplacement dudit élément d'application de force (720),
dans lequel, en outre ou à titre alternatif, ledit élément d'application de force (720) peut être conçu pour être mobile en translation,
dans lequel, en outre ou à titre alternatif, ledit mécanisme d'amortissement peut comprendre un amortisseur linéaire (80), par exemple un amortisseur à friction, ou un amortisseur visqueux tel qu'un amortisseur à fluide, ou un vérin pneumatique, par exemple une chambre à vide avec un piston, dans lequel ledit mécanisme d'amortissement peut être logé dans ledit élément d'application de force (720),
dans lequel, en outre ou à titre alternatif, ledit mécanisme d'amortissement peut comprendre un amortisseur rotatif (90), par exemple un amortisseur à friction ou un amortisseur visqueux,
dans lequel ledit amortisseur rotatif (90) peut être accouplé de manière fonctionnelle audit élément d'application de force (720) au moyen d'un mécanisme d'engrenage (91), dans lequel ledit amortisseur rotatif (90) peut être accouplé de manière fonctionnelle audit élément d'application de force (720) au moyen d'un pignon (92) qui est en prise avec une partie dentée (724) sur ledit élément d'application de force (720).

5. Coffre de chargement (10 ; 20) selon l'une des revendications 1 à 4,
dans lequel ledit mécanisme d'amortissement (7) est accouplé de manière fonctionnelle audit premier élément de liaison (201 ; 701 ; 801) et audit second élément de liaison (202 ; 702 ; 802).

6. Coffre de chargement (10 ; 20) selon la revendication 5,
dans lequel ledit mécanisme d'amortissement (7) comprend un amortisseur linéaire accouplé de manière fonctionnelle audit premier élément de liaison (201 ; 701 ; 801) au niveau d'une première section d'accouplement (111) de celui-ci et accouplé de manière fonctionnelle audit second élément de liaison (202 ; 702 ; 802) au niveau d'une seconde section d'accouplement (112) de celui-ci.

7. Coffre de chargement (10 ; 20) selon la revendication 5,
dans lequel ledit mécanisme d'amortissement comprend un amortisseur rotatif (90) présentant
un boîtier (96) accouplé de manière fonctionnelle, par exemple accouplé de manière mobile et solidaire, audit premier élément de liaison (201 ; 701 ; 801) ou audit second élément de liaison (202 ; 702 ; 802), et
un arbre rotatif (99), par exemple un piston rotatif, accouplé de manière fonctionnelle à l'autre dudit second élément de liaison (202 ; 702 ; 802) et dudit premier élément de liaison (201 ; 701 ; 801),
dans lequel ledit arbre rotatif (99) peut être conçu de telle sorte qu'il forme une broche de pivotement définissant ledit axe de pivotement (P) ou de telle sorte qu'il soit coaxial avec ledit axe de pivotement, par exemple de telle sorte que ledit second élément de liaison puisse être directement supporté sur ledit arbre rotatif (99).

8. Coffre de chargement (30) selon l'une des revendications 1 à 7, dans lequel ledit coffre de chargement est conçu pour être repliable, par exemple en prévoyant un couvercle (32) repliable et/ou une partie de base repliable qui est/sont transférables entre une configuration repliée dans laquelle un volume dudit couvercle et/ou de ladite partie de base est réduit et une configuration déployée dans laquelle un volume dudit couvercle et/ou de ladite partie de base est agrandi.
